(19) **Europäisches Patentamt**
**European Patent Office**
**Office européen des brevets**

(11) **EP 2 950 591 B1**

(12) **EUROPEAN PATENT SPECIFICATION**

(45) Date of publication and mention
of the grant of the patent:
**08.03.2017 Bulletin 2017/10**

(51) Int Cl.:
**H04W 48/20** *(2009.01)*

(21) Application number: **14186325.8**

(22) Date of filing: **25.09.2014**

(54) **Method, system and computer program product for determining trusted wireless access points**

Verfahren, System und Computerprogrammprodukt zur Bestimmung von zuverlässigen drahtlosen Zugangspunkten

Procédé, système et produit de programme d'ordinateur permettant de déterminer des points d'accès sans fil sécurisé

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.05.2014 RU 2014121040**
**24.06.2014 US 201414312838**

(43) Date of publication of application:
**02.12.2015 Bulletin 2015/49**

(73) Proprietor: **Kaspersky Lab, ZAO**
**Moscow 125212 (RU)**

(72) Inventors:
• **Borovikov, Nikolay V.**
**125212 Moscow (RU)**
• **Yablokov, Victor V.**
**125212 Moscow (RU)**

(74) Representative: **Sloboshanin, Sergej et al**
**V. Füner Ebbinghaus Finck Hano**
**Patentanwälte**
**Mariahilfplatz 3**
**81541 München (DE)**

(56) References cited:
**WO-A1-2006/093634      US-A1- 2011 208 866**
**US-A1- 2013 040 603      US-B1- 8 537 715**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Technical Field**

The present invention relates generally to the field of networks security and, more specifically, to a system, a method and a computer program product of determining trusted wireless access points according to claims 1, 7 and 13.

**Background**

The development of wireless technologies has increased opportunities to access to the Internet. There is a constant growth in the number of public wireless access points that provide free access to the Internet. The wireless access points are located in the subway, shopping centers, airports, libraries, in the street, and so on.

A wireless access point generally includes an apparatus that provide wireless access to an already existing network (e.g., wireless or wireline). For transmission of information, wireless access points use radio waves from the frequency spectrum as determined by a standard, such as IEEE 802.11, GPRS, EDGE, HSPA and so on.

Wireless access points may be multifunctional, which means that they may not only organize a wireless network and provide the wireless connection of notebooks, computers, PDAs and other mobile devices of a local-area network, but also are able through various operating conditions to expand the existing wireless network, operate in a state of connection to the provider by a wireless network, operate as a wireless bridge for the connection of two wireline networks that are isolated from each other, and perform other functions.

In turn, mobile device users are eager to use wireless access points to access the Internet. Mobile device users take advantage of the opportunity to go online in order to chat on social networks, read the news, check email, perform bank transactions, and so on.

It must be kept in mind that a user, by connecting to a wireless access point, runs the risk of being tricked and user's activity on the network may be accessible to third parties. The need therefore arises to warn the user as to the possible consequences of using wireless access points and to inform the user when a selected access point is trusted (e.g., secure).

US 2011/0208866 A1 discloses a method for determining whether to establish a connection between a computer and a network, including: receiving a first network information from a network; determining a first trust level for the network by matching the network information to a provisioning information, wherein the provisioning information indicates the first trust level and an authentication method of the network; verifying that the network supports the authentication method, wherein the verifying includes exchanging information with the network; after verifying that the network supports the authentication method, establishing a connection to the network, wherein the connection provides access to the Internet.

US 8,537,715 B1 discloses a method and a device for wireless network selection, wherein a multi-mode modem allows the modem firmware to select an available network and to collect primary and secondary network selection attributes in order to derive network selection criteria value and to determine whether the derived network selection criteria value is within an expected range, in which case the remote access point will establish a connection through the multi-mode modem on the modem-selected network.

**Summary**

The subject of the present invention is defined in claims 1, 7 and 13 embodiments of which are subject of subclaims 2 to 6, and 8 to 12.

Disclosed are examples of systems, methods and computer program products for determining trusted wireless access points. The technical result of the disclosed aspects is to increase the degree of protection of the network connection of a mobile device to a network resource when using a wireless access point, when more than one wireless access point are available, by determining on the mobile device requesting a connection trusted wireless access points that are acceptable for establishing the connection to the network resource.

In one example, a method for determining trusted wireless access points includes: obtaining a plurality of access point characteristics of the one or more wireless access points; obtaining a plurality of network resource characteristics for connecting to the network resource; comparing the plurality of access point characteristics and the plurality of network resource characteristics; determining based on the comparison at least one trusted wireless access points that is acceptable for establishing a connection to the network resource; and establishing a connection to the network resource via the trusted wireless access points.

In one example, the access point characteristics may include at least one of an address of an access point, an identifier of the access point, a cell identifier, a service set identification (SSID), a base service identification (BSID), a control scheme for encryption keys, a network protection technology, a hidden SSID, a channel traffic capacity of the access point, a number of unique users having connected to the access point during existence of the access point, a physical location of the access point, a type of wireless network served by the access point, an identifier of a communications operator of the access point, a firmware version of the access point, a period of operation of the access point, a number of security incidents at the access point, a level of trust of users of the access point, and a frequency of changing of setup parameters of the access point.

In one example, comparing the access point characteristics and the network resource characteristics may include: calculating an access point coefficient based on the access point characteristics; and calculating a network resource coefficient based on the network resource characteristics.

In another example, comparing the access point characteristics and the network resource characteristics may further include: assigning a first value to an access point characteristic and a second value to a corresponding network resource characteristics; and attributing a significance factor to the access point characteristic and the corresponding network resource characteristics, wherein a value of the significance factor is based on an importance of the characteristic to the network resource.

In one example, the access point coefficient may be calculated based on a product of the first value and the significance factor, and wherein the network resource coefficient is calculated based on a product of the second value and the significance factor.

In one example, an access point may be determined to be acceptable for establishing a connection to the network resource if the access point coefficient is equal or greater than the network resource coefficient, and wherein an access point is determined to be unacceptable for establishing a connection to the network resource if the access point coefficient is less than the network resource coefficient.

In one example, if a plurality of access points is determined to be acceptable for establishing a connection to the network resource, then the method may further include selecting an access point of the plurality of access points with a highest access point coefficient to establish the connection to the network resource.

In another example, a system for determining trusted wireless access points includes a processor configured to identify one or more wireless access points are available to connect to a network resource; obtain a plurality of access point characteristics of the one or more wireless access points; obtain a plurality of network resource characteristics for connecting to the network resource; compare the plurality of access point characteristics and the plurality of network resource characteristics; determine based on the comparison at least one trusted wireless access points that is acceptable for establishing a connection to the network resource; and establish a connection to the network resource via the trusted wireless access points.

In another example, a computer program product, stored on a non-transitory computer readable medium, for determining trusted wireless access points, includes computer executable instructions for: identifying one or more wireless access points are available to connect to a network resource; obtaining a plurality of access point characteristics of the one or more wireless access points; obtaining a plurality of network resource characteristics for connecting to the network resource; comparing the plurality of access point characteristics and the plurality of network resource characteristics; determining based on the comparison at least one trusted wireless access points that is acceptable for establishing a connection to the network resource; and establishing a connection to the network resource via the trusted wireless access points.

The above simplified summary of example aspects serves to provide a basic understanding of the present disclosure. This summary is not an extensive overview of all contemplated aspects, and is intended to neither identify key or critical elements of all aspects nor delineate the scope of any or all aspects of the present disclosure. Its sole purpose is to present one or more aspects in a simplified form as a prelude to the more detailed description of the disclosure that follows. To the accomplishment of the foregoing, the one or more aspects of the present disclosure include the features described and particularly pointed out in the claims.

**Brief Description of the Drawings**

The accompanying drawings, which are incorporated into and constitute a part of this specification, illustrate one or more example aspects of the present disclosure and, together with the detailed description, serve to explain their principles and implementations.

**Fig. 1** illustrates an example of a public zone of access to the Internet including a system for determining trusted wireless device access points;
**Fig. 2** illustrates an example of a method for determining trusted wireless access points;
**Fig. 3** illustrates an example of a system for determining trusted wireless access points;
**Fig. 4** illustrates an example of a general-purpose computer system on which are implemented systems and methods for determining trusted wireless device access points.

**Detailed Description**

Example aspects are described herein in the context of a system, method and computer program product for determining trusted wireless access points. Those of ordinary skill in the art will realize that the following description is illustrative only and is not intended to be in any way limiting. Other aspects will readily suggest themselves to those skilled in the art having the benefit of this disclosure. Reference will now be made in detail to implementations of the example aspects as illustrated in the accompanying drawings. The same reference indicators will be used to the extent possible throughout the drawings and the following description to refer to the same or like items.

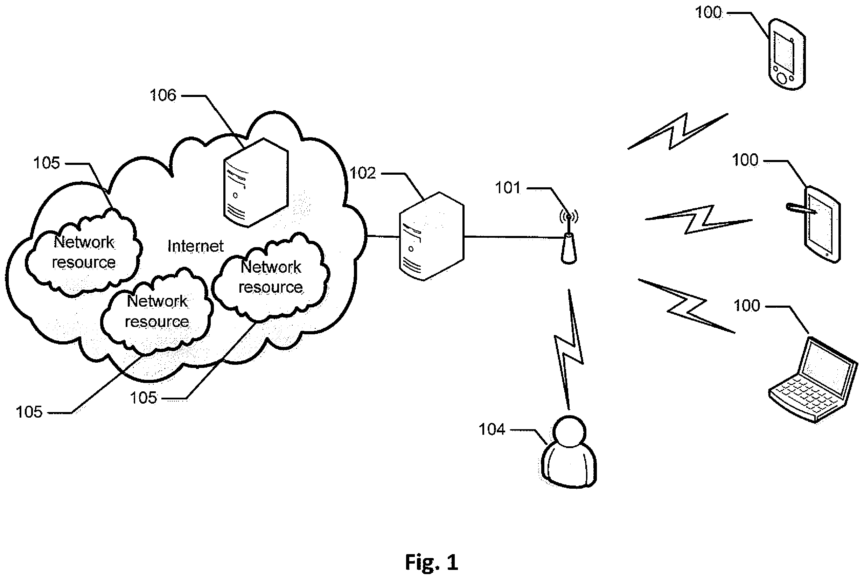

**Fig.1** presents an example of a public zone of wireless access to the Internet by means of a wireless access point 101 with connection standard IEEE 802.11(Wi-Fi). Wi-Fi technology may provide devices 100 with access to network resources 105 of the Internet by the radio access protocol of standard 802.11xx within the operating radius of the wireless access point 101. A public zone of wireless access includes a territory (e.g., the premises of a train station, office, school auditorium, cafe, and so forth) covered by a wireless Wi-Fi network on which a user, having a device 100 with a wireless adapter of the Wi-Fi standard, may connect to network resources 105 through the Internet, for example. Such network resources in a particular instance may include a device or data stored on a certain system component of the computer system to which remote access may be provided from another computer, for example, via the Internet. Access to the network resources may be free or limited and it occurs by going to the network address of the network resource, where the network address is a unique identifier of the resource. An example of an address might be the IP (Internet Protocol Address), a unique network address of a node in a computer network built by the IP protocol, such as 208.73.211.176, or the URL (Uniform Resource Locator), a universal network resource indicator which is the standardized method of notation for a resource address on the Internet, such as "http://www.kaspersky.com".

In one example, to organize a public zone, the access point may be connected to the Internet service provider 102 using one of the standard methods: ADSL or 3G technology, or the Fast Ethernet local-area network.

When connecting the device 100 to the network resources 105 by using a public wireless access point 101, all of the network traffic between the device 100 and the network resource 105 goes through the given access point, and the traffic may also contain personal data. Therefore, if the access point is compromised (e.g., a hacker has gained privileged access to the access point), inadequately protected, or created specifically by a hacker, the hacker 104 may gain access to the traffic going to and from the device 100. Therefore, before establishing a connection to a network resource 105 via the wireless access point 101, it is important to understand how secure the access point 101 is, and whether it may be trusted, i.e., may the given access point be used to transmit confidential data without risk of third parties gaining access to this data.

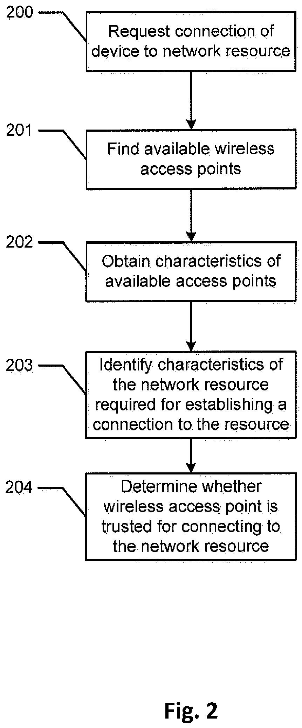

**Fig. 2** depicts example of a method for determining trusted wireless access points. In step 200, the device 100 requests a connection to the network resource 105. In a particular instance, a connection may be requested when a device user clicks on a hyperlink that refers to a network address, enters the network address on the address line of a Web browser of the device 100, and so forth. Next, in step 201, the device 100 searches, using known techniques, for available wireless access points that may be used to make the connection. In one example, available access point may include a wireless access point, which is already used by the device 100 to connect to the network, such as the Internet. The device 100 searches for available access points of the network, such as Wi-Fi, LTE or GSM, and finds the available access points that may be used to make the connection. In step 202, the device 100 obtains characteristics of the identified wireless access points.

In one example, the characteristics of the wireless access point may include various technical characteristics, including but not limited to:

- the public address of the wireless access point;
- the identifier of the transmitting and receiving equipment or the address of the access point;
- the identification code of the cellular base station;
- the cell identifier;
- the SSID (Service Set Identification);
- the BSID (Base Service Set Identification);
- the control scheme for the encryption keys (EAP, PSK);
- the network protection technology (WPA, WPA2);
- hidden SSID (for networks not publishing their SSID);
- the channel traffic capacity;
- the physical location of the device (street, facility, library, subway, and so on);
- the type of wireless network of the wireless access point;
- the identifier of the communications operator;
- the firmware version;
- the default password;

- the presence of firmware vulnerabilities

In another example, the characteristics of the wireless access point may include various statistical characteristics, including but not limited to:

- the period of operation (e.g., how long has the given access point been known, for example, to the security server 106)
- the existence of incidents involving security (e.g., previous data theft when connecting to the given point)
- the level of trust of users in the access point (which may be obtained from the security server 106 for example)
- the frequency of changing the setup parameters of the access point (e.g., protocols, passwords, public addresses)

In one example, the device 100 may receive these characteristics independently, for example, the type of network and the name of the network, using its own technical capabilities. If it cannot obtain all the necessary characteristics (due to, for example, limited technical capabilities of the device), the device 100 may a request a secure connection (e.g., WPA, WPA2) with the security server 106 and, after transmitting the identification data of the wireless access point 101, which may include unique technical characteristics or a hash calculated from them, the device 100 may receive the necessary characteristics from the server 106. In one example, the device 100 may also send to the server 106 information about firmware of the wireless access point 101, and the server 106 may return information as to the presence of vulnerabilities for this firmware. The device 100 may use one of the identified wireless access points to establish a secure connection with the security server 106. Also, if the device 100 has previously reviewed the wireless access point 101, the device 100 in a particular instance may save the previously obtained characteristics of the wireless access point 101.

In step 203, the device 100 may obtain characteristics of the network resource required for establishing a connection to the network resource 105. For example, when a connection to a new network resource is requested, which requires no authentication, the requirements for the wireless access point 101 may be mainly dependent on the traffic capacity of the wireless channel. In another example, when the device 100 is accessing an Internet banking service, the requirements for the security of the wireless access point 101 that provides access to the banking service may be more stringent. The characteristics of the network resource 105 may be obtained, for example, from the network resource, a computer (e.g., web server) that hosts the resource, a network firewall that protects the network resource, or the security server 106.

In one example, the required characteristics of the network resource may be then stored on the device 100 and systematized by type of network resource, for example:

- services that perform financial transactions;
- services requiring authentication;
- file and video hosting services;
- other types of resources.

In another, the required characteristics may be saved on the security server 106.

Finally, at step 204, the device 100 determines whether any of the identified wireless access points 101 can be trusted (i.e., acceptable) to establish a connection to the network resource 105. This analysis may be made by comparing the characteristics of the identified wireless access points with the required characteristics for the network resource to which connection is requested. In one example, the analysis may be done using pairwise comparing of the required characteristics with the characteristics obtained from the identified wireless access points 101. For example, a connection is requested to a network resource with the address "http://superonlinebank.com", the required characteristics of the network resource are: network protection technology, such as WPA or WPA2, popularity of the access point over 2500 unique users, and traffic capacity over 1 Mbit/s. The characteristics obtained from one available wireless access point 101 are support of WPA protocol, popularity of 200 users, and channel capacity of 10 Mbit/s. By pairwise comparing of these characteristics, it is determined that the current value of the available access point 101 in terms of the popularity characteristic is below what is required threshold, and so the given access point cannot be trusted for establishing a connection with the requested network resource.

In another example, a coefficient of the network resource and a coefficient of the access point may be used for the comparison of the characteristics of the two. These coefficients may be obtained in one example by one of the following methods: neural network, fuzzy logic, or summation considering the significance of the characteristics. The coefficient of the network resource may be calculated based on the required characteristics, while the coefficient of the access point may be calculated based on the obtained characteristics. Next, the coefficient of the network resource is compared with the coefficient of the access point and if the coefficient of the network resource is larger than the coefficient of the access point, then the access point cannot be used. For example, summation considering the significance of the characteristics may be performed as follows:

$$K_{s/p} = X_1 {}^* K_{x1} + X_2 {}^* K_{x2} + X_3 {}^* K_{x3} + ... + X_n {}^* K_{xn},$$

where:

$K_s$ - coefficient of the network resource;
$K_p$ - coefficient of the access point;
$X_n$ - significance factor;
$K_{xn}$ - value of the characteristic.

The significance factor reflects the importance of the characteristic being used. This factor may be determined, for example, by the current security rules for network connections of organizations (such as banks) providing access to the requested network resource. Using this factor makes it possible to account for differences in the significance of the characteristics.

The calculation of coefficient $K_{s/p}$ the by the above technique is illustrated by the following example. A connection is requested to a network resource with the address "http://superonlinebank.com". The required characteristics for access to the network resource are: protocol used WPA or higher ($K_{x1}$), popularity of the access point over 2500 unique users having connected to the access point in the total time of existence of the access point ($K_{x2}$), traffic capacity of the access point is over 1 Mbit/s ($K_{x3}$). The determined values of the characteristics for the network resoruce are: $K_{x1} = 1$ (WPA), $K_{x1} = 2$ (WPA2), $K_{x2} = 1$ (popularity >2500), $K_{x2} = 0$ (popularity <2500), $K_{x3} = 0.1$ (traffic capacity 1 Mbit/s). The significance factors may be assigned on the basis of the security requirements for network connections when using wireless access points, as determined for the group of network resources to which the resource http://superonlinebank.com belongs, and these factors in one example may be saved on the security server 106: $X_1=3$, $X_2=1$, $X_3=1$. The required coefficient of the network resource $K_s$ may be determined as follows:

$$K_s = X_1 {}^* K_{x1} + X_2 {}^* K_{x2} + X_3 {}^* K_{x3} = 3 {}^* 1 + 1 {}^* 1 + 1 {}^* 0.1 = 4.1$$

Next, the coefficient of the access point is determined basedon the obtained characteristics. The obtained characteristics are: protocol WPA, popularity 200, channel capacity 10 Mbit/s. The coefficient of the wireless access point $K_p$ may be determined may be determined as follows:

$$K_p = X_1 {}^* K_{x1} + X_2 {}^* K_{x2} + X_3 {}^* K_{x3} = 3 {}^* 1 + 1 {}^* 0 + 1 {}^* (0.1 {}^* 10) = 4.$$

It is evident from the calculations that the obtained coefficient of the access point $K_p$ is lower than the required coefficient of the network resource $K_s$, and therefore the available access point cannot be considered trusted and cannot be used to access the network resource.

In one example, if a wireless access point already used for connecting the device 101 to the network is found to be trusted, it may be used for establishing a connection to the requested network resource 105.

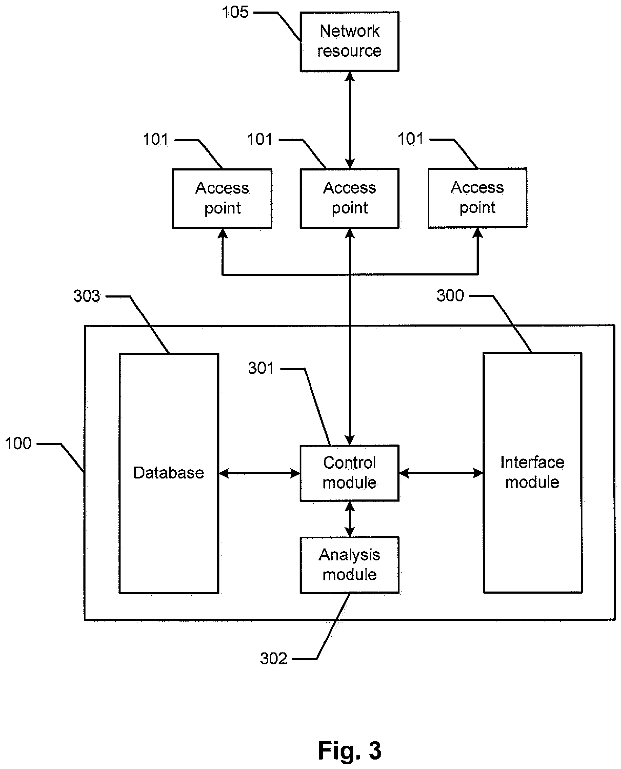

Fig.3 illustrates an example of a system for determining trusted wireless access points. The interface module 300 of the device 100 via a control module 301 requests access to a network resource 105. The control module 301 of the device 100 finds available wireless points 101 that may be used to establish the connection to the network resource 105. The control module 301 obtains the characteristics of the found wireless access points 101 and obtains the required characteristics for accessing the network resource 105. The control module 301 sends the obtained information to the analysis module 302, the analysis module 302 of the device 100 determines whether the access points 101 can be trusted (i.e., acceptable) for establishing the connection by comparing the obtained characteristics of the found access points with the required characteristics of the network resource. A database 303 may be used to store the information on the characteristics of the access points to which a previous connection was made and to store the required characteristics of the network resource 105. The control module 301 uses the database 303 to obtain the characteristics of the available access points 101 and the required characteristics of the network resources 105.

In one example, a situation is possible where several available access points can be trusted (i.e., meet the required characteristics of the request network resource), in which case the device 101 may select to use the wireless access point with the highest coefficient of all available access points.

In one example, the search for trusted wireless access points may be performed each time there is a connection to a new network resource. In the event that an access point already being used meets the required characteristics, it may continue to be used when connecting to the new network resource.

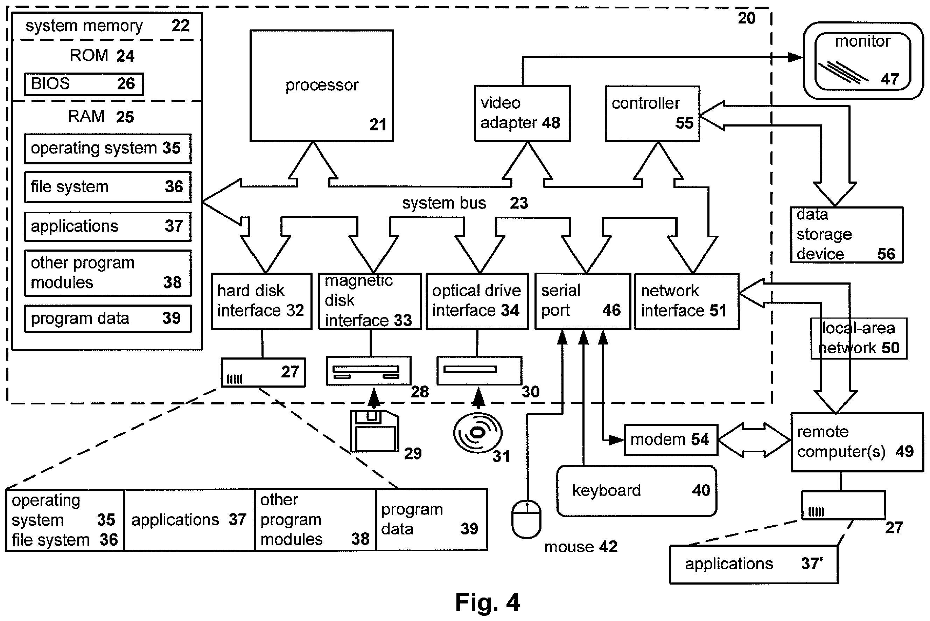

**Fig. 4** shows an example of a general-purpose computer system (which may be a personal computer or a server) 20, which may be used to implement example system and methods disclosed herein. The computer system 20 includes a central processing unit 21, a system memory 22 and a system bus 23 connecting the various system components, including the memory associated with the central processing unit 21. The system bus 23 is realized like any bus structure known from the prior art, including in turn a bus memory or bus memory controller, a peripheral bus and a local bus, which is able to interact with any other bus architecture. The system memory includes permanent memory (ROM) 24 and random-access memory (RAM) 25. The basic input/output system (BIOS) 26 includes the basic procedures ensuring the transfer of information between elements of the personal computer 20, such as those at the time of loading the operating system with the use of the ROM 24.

The personal computer 20, in turn, includes a hard disk 27 for reading and writing of data, a magnetic disk drive 28 for reading and writing on removable magnetic disks 29 and an optical drive 30 for reading and writing on removable optical disks 31, such as CD-ROM, DVD-ROM and other optical information media. The hard disk 27, the magnetic disk drive 28, and the optical drive 30 are connected to the system bus 23 across the hard disk interface 32, the magnetic disk interface 33 and the optical drive interface 34, respectively. The drives and the corresponding computer information media are power-independent modules for storage of computer instructions, data structures, program modules and other data of the personal computer 20.

The present disclosure provides the implementation of a system that uses a hard disk 27, a removable magnetic disk 29 and a removable optical disk 31, but it should be understood that it is possible to employ other types of computer information media 56 which are able to store data in a form readable by a computer (solid state drives, flash memory cards, digital disks, random-access memory (RAM) and so on), which are connected to the system bus 23 via the controller 55.

The computer 20 has a file system 36, where the recorded operating system 35 is kept, and also additional program applications 37, other program modules 38 and program data 39. The user is able to enter commands and information into the personal computer 20 by using input devices (keyboard 40, mouse 42). Other input devices (not shown) may be used: microphone, joystick, game controller, scanner, and so on. Such input devices usually plug into the computer system 20 through a serial port 46, which in turn is connected to the system bus, but they may be connected in other ways, for example, with the aid of a parallel port, a game port or a universal serial bus (USB). A monitor 47 or other type of display device is also connected to the system bus 23 across an interface, such as a video adapter 48. In addition to the monitor 47, the personal computer may be equipped with other peripheral output devices (not shown), such as loudspeakers, a printer, and so on.

The personal computer 20 is able to work in a network environment, using a network connection to one or more remote computers 49. The remote computer (or computers) 49 are also personal computers or servers having the majority or all of the aforementioned elements in describing the nature of a personal computer 20, as shown in Fig. 4. Other devices may also be present in the computer network, such as routers, network stations, peer devices or other network nodes.

Network connections may form a local-area computer network (LAN) 50 and a wide-area computer network (WAN). Such networks are used in corporate computer networks and internal company networks, and they generally have access to the Internet. In LAN or WAN networks, the personal computer 20 is connected to the local-area network 50 across a network adapter or network interface 51. When networks are used, the personal computer 20 may employ a modem 54 or other modules for providing communications with a wide-area computer network such as the Internet. The modem 54, which is an internal or external device, is connected to the system bus 23 by a serial port 46. It should be noted that the network connections are only examples and need not depict the exact configuration of the network, i.e., in reality there are other ways of establishing a connection of one computer to another by technical communication modules.

In various examples, the systems and methods described herein may be implemented in hardware, software, firmware, or any combination thereof. If implemented in software, the methods may be stored as one or more instructions or code on a non-transitory computer-readable medium. Computer-readable medium includes data storage. By way of example, and not limitation, such computer-readable medium may comprise RAM, ROM, EEPROM, CD-ROM, Flash memory or other types of electric, magnetic, or optical storage medium, or any other medium that may be used to carry or store desired program code in the form of instructions or data structures and that may be accessed by a processor of a general purpose computer.

In various examples, the systems and methods described in the present disclosure in terms of modules. The term "module" as used herein refers to a real-world device, component, or arrangement of components implemented using hardware, such as by an application specific integrated circuit (ASIC) or field-programmable gate array (FPGA), for example, or as a combination of hardware and software, such as by a microprocessor system and a set of instructions to implement the module's functionality, which (while being executed) transform the microprocessor system into a special-purpose device. A module may also be implemented as a combination of the two, with certain functions facilitated by hardware alone, and other functions facilitated by a combination of hardware and software. In certain implementations, at least a portion, and in some cases, all, of a module may be executed on the processor of a general purpose computer (such as the one described in greater detail in Fig. 4 above). Accordingly, each module may be realized in a variety of suitable configurations, and should not be limited to any particular implementation exemplified herein.

In the interest of clarity, not all of the routine features of the aspects are disclosed herein. It will be appreciated that in the development of any actual implementation of the present disclosure, numerous implementation-specific decisions must be made in order to achieve the developer's specific goals, and that these specific goals will vary for different implementations and different developers. It will be appreciated that such a development effort might be complex and time-consuming, but would nevertheless be a routine undertaking of engineering for those of ordinary skill in the art having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of the skilled in the relevant art(s). Moreover, it is not intended for any term in the specification or claims to be ascribed an uncommon or special meaning unless explicitly set forth as such.

The various aspects disclosed herein encompass present and future known equivalents to the known modules referred to herein by way of illustration. Moreover, while aspects and applications have been shown and described, it would be apparent to those skilled in the art having the benefit of this disclosure that many more modifications than mentioned above are possible without departing from the inventive concepts disclosed herein.

**Claims**

1. A method for determining trusted wireless access points, the method comprising:

identifying, by a control module (301) of a mobile device (100), one or more wireless access points (101) available to connect to a network to access data (105) hosted on a computer in the network;

obtaining, by the control module (301), a plurality of access point characteristics for each of the one or more identified wireless access points (101), wherein the access point characteristics comprise at least one of a period of operation of the access point (101), a number of security incidents at the access point (101), a level of trust of users of the access point (101), and a frequency of changing of setup parameters of the access point (101);

obtaining, by the control module (301) and from at least one of the data (105) and the computer hosting the data (105), a plurality of network resource characteristics required to access the data (105), wherein the network resource characteristics relate to required network security and required network bandwidth to access the data (105);

calculating, by an analysis module (302) of the mobile device (100), an access point coefficient ($K_p$) for each of the one or more identified wireless access points (101) that is based on the plurality of access point characteristics;

calculating, by the analysis module (302), a network resource coefficient ($K_s$) for the data (105) hosted on the computer that is based on the plurality of network resource characteristics;

comparing, by the analysis module (302), each calculated access point coefficient ($K_p$) to the calculated network resource coefficient ($K_s$);

determining, by the analysis module (302), based on the comparison of the access point coefficient ($K_p$) and the network resource coefficient ($K_s$), at least one trusted wireless access point (101) of the one or more identified wireless access points (101) that is acceptable for establishing a connection to access the data (105) hosted on the computer in the network; and

establishing, by the mobile device (100), a connection to the network via the trusted wireless access point (101) to access the data (105) hosted on the computer in the network.

2. The method of claim 1, wherein the access point characteristics further comprise at least one of an address of the access point (101), an identifier of the access point (101), a cell identifier, a service set identification (SSID), a base service identification (BSID), a control scheme for encryption keys, a network protection technology, a hidden SSID, a channel traffic capacity of the access point (101), a number of unique users having connected to the access point (101) during existence of the access point (101), a physical location of the access point (101), a type of wireless network (105) served by the access point (101), an identifier of a communications operator of the access point (101), and a firmware version of the access point (101).

3. The method of claim 1, wherein comparing the access point characteristics and the network resource characteristics further comprises:

assigning a first value to an access point characteristic and a second value to a corresponding network resource characteristic; and
attributing a significance factor to the access point characteristic and the corresponding network resource characteristic, wherein a value of the significance factor is based on an importance of the characteristic to the data (105) hosted on the computer in the network.

4. The method of claim 3, wherein the access point coefficient ($K_p$) is calculated based on a product of the first value and the significance factor, and wherein the network resource coefficient ($K_s$) is calculated based on a product of the second value and the significance factor.

5. The method of claim 4, wherein the access point (101) is determined to be acceptable for establishing a connection to access the data (105) hosted on the computer in the network if the access point coefficient ($K_p$) is equal or greater than the network resource coefficient ($K_s$), and wherein an access point (101) is determined to be unacceptable for establishing a connection to access the data (105) hosted on the computer in the network if the access point coefficient ($K_p$) is less than the network resource coefficient ($K_s$).

6. The method of 5, wherein, if a plurality of access points (101) is determined to be acceptable for establishing a connection to access the data (105) hosted on the computer in the network, an access point (101) of the plurality of access points (101) with a highest access point coefficient ($K_p$) is selected to establish the connection to the network.

7. A system for determining trusted wireless access points (101), the system comprising:

a mobile device (100) comprising a control module (301) and an analysis module (302) configured to:

identify, by the control module (301), one or more wireless access points (101) available to connect to a network to access a data (105) hosted on a computer in the network;

**characterized in that** the mobile device (100) is configured to:

obtain, by the control module (301), a plurality of access point characteristics for each of the one or more identified wireless access points (101), wherein the access point characteristics comprise at least one of a period of operation of the access point (101), a number of security incidents at the access point (101), a level of trust of users of the access point (101), and a frequency of changing of setup parameters of the access point (101);
obtain, by the control module (301) and from at least one of the data (105) and the computer hosting the data (105), a plurality of network resource characteristics required to access the data (105), wherein the network resource characteristics relate to required network security and required network bandwidth to access the data (105);

calculate, by the analysis module (302), an access point coefficient ($K_p$) for each of the one or more identified wireless access points (101) that is based on the plurality of access point characteristics;
calculate, by the analysis module (302), a network resource coefficient ($K_s$) for the data (105) hosted on the computer that is based on the plurality of network resource characteristics;

compare, by the analysis module (302), each calculated access point coefficient ($K_p$) to the calculated network resource coefficient ($K_s$);
determine, by the analysis module (302), based on the comparison of the access point coefficient ($K_p$) and the network resource coefficient ($K_s$), at least one trusted wireless access point (101) of the one or more identified wireless access points (101) that is acceptable for establishing a connection to access the data (105) hosted on the computer in the network; and

establish a connection to the network via the at least one trusted wireless access point (101) to access the data (105) hosted on the computer in the network.

8. The system of claim 7, wherein the access point characteristics further comprise at least one of an address of an access point (101), an identifier of the access point (101), a cell identifier, a service set identification (SSID), a base service identification (BSID), a control scheme for encryption keys, a network protection technology, a hidden SSID, a channel traffic capacity of the access point (101), a number of unique users having connected to the access point (101) during existence of the access point (101), a physical location of the access point (101), a type of wireless network served by the access point (101), an identifier of a communications operator of the access point (101), a firmware version of the access point (101).

9. The system of claim 7, wherein to compare the access point characteristics and the network resource characteristics, the mobile device (100) is further configured to:

assign a first value to an access point characteristic and a second value to a corresponding network resource characteristic; and

attribute a significance factor to the access point characteristic and the corresponding network resource characteristic, wherein a value of the significance factor is based on an importance of the characteristic to the data (105) hosted on the computer in the network.

10. The system of claim 9, wherein the access point coefficient ($K_p$) is calculated based on a product of the first value and the significance factor, and wherein the network resource coefficient ($K_s$) is calculated based on a product of the second value and the significance factor.

11. The system of claim 10, wherein an access point (101) is determined to be acceptable for establishing a connection to access the data (105) hosted on the computer in the network if the access point coefficient ($K_p$) is equal or greater than the network resource coefficient ($K_s$), and wherein an access point (101) is determined to be unacceptable for establishing a connection to access the data (105) hosted on the computer in the network if the access point coefficient ($K_p$) is less than the network resource coefficient ($K_s$).

12. The system of claim 11, wherein, if a plurality of access points (101) is determined to be acceptable for establishing a connection to access the data (105) hosted on the computer in the network, an access point (101) of the plurality of access points (101) with a highest access point coefficient ($K_p$) is selected to establish the connection to the network.

13. A computer program product stored on a non-transitory computer-readable medium, for determining trusted wireless access points, wherein the computer program product includes computer-executable instructions according to one of the claims 1 to 6.

**Patentansprüche**

1. Verfahren zum Bestimmen vertrauenswürdiger drahtloser Zugangspunkte, wobei das Verfahren umfasst:

Identifizieren, durch ein Steuermodul (301) eines Mobilgeräts (100), eines oder mehrerer drahtloser Zugangspunkte (101), die verfügbar sind, um sich mit einem Netzwerk zu verbinden, um auf Daten (105) zuzugreifen, die auf einem Computer in dem Netzwerk gehostet sind;

Erhalten, durch das Steuermodul (301), einer Vielzahl von Zugangspunktcharakteristika für jeden des einen oder der mehreren identifizierten drahtlosen Zugangspunkte (101), wobei die Zugangspunktcharakteristika eine Betriebsdauer des Zugangspunkts (101), eine Anzahl von Sicherheitsvorfällen an dem Zugangspunkt (101), ein Vertrauensniveau von Benutzern des Zugangspunkts (101) und/oder eine Änderungsfrequenz von Setupparametern des Zugangspunkts (101) umfassen;

Erhalten, durch das Steuermodul (301) und von den Daten (105) und/oder dem die Daten hostenden Computer (105), einer Vielzahl von Netzwerkressourcencharakteristika, die erforderlich sind, um auf die Daten (105) zuzugreifen, wobei sich die Netzwerkressourcencharakteristika auf eine erforderliche Netzwerksicherheit und erforderliche Netzwerkbandbreite beziehen, um auf die Daten zuzugreifen;

Berechnen, durch ein Analysemodul (302) des Mobilgeräts (100), eines Zugangspunktkoeffizienten ($K_p$) für jeden des einen oder der mehreren identifizierten drahtlosen Zugangspunkte (101), der auf der Vielzahl von Zugangspunktcharakteristika basiert;

Berechnen, durch das Analysemodul (302), eines Netzwerkressourcenkoeffizienten ($K_s$) für die auf dem Computer gehosteten Daten (105), der auf der Vielzahl von Netzwerkressourcencharakteristika basiert;

Vergleichen, durch das Analysemodul (302), jedes berechneten Zugangspunktkoeffizienten ($K_p$) mit dem berechneten Netzwerkressourcenkoeffizienten ($K_s$);

Bestimmen, durch das Analysemodul (302), basierend auf dem Vergleich des Zugangspunktkoeffizienten ($K_p$) und des Netzwerkressourcenkoeffizienten ($K_s$), wenigstens eines vertrauenswürdigen drahtlosen Zugangspunkts (101) des einen oder der mehreren identifizierten drahtlosen Zugangspunkte (101), der akzeptabel für das Aufbauen einer Verbindung ist, um auf die auf dem Computer gehosteten Daten (105) zuzugreifen; und

Aufbauen, durch das Mobilgerät (100), einer Verbindung zu dem Netzwerk über den vertrauenswürdigen drahtlosen Zugangspunkt (101), um auf die auf dem Computer in dem Netzwerk gehosteten Daten (105) zuzugreifen.

2. Verfahren nach Anspruch 1, wobei die Zugangspunktcharakteristika ferner eine Adresse des Zugangspunkts (101), eine Kennung des Zugangspunkts (101), eine Funkzellenkennung, eine Service-Satz-Identifikation (SSID), eine Basis-Service-Identifikation (BSID), ein Steuerschema für Codierungsschlüssel, eine Netzwerkschutztechnologie, eine versteckte SSID, eine Verkehrskanalkapazität des Zugangspunkts (101), eine Anzahl von einmaligen Benutzern, die sich mit dem Zugangspunkt (101) während der Existenz des Zugangspunkts (101) verbunden haben, einen physischen Ort des Zugangspunkts (101), einen Typ des drahtlosen Netzwerks (105), das von dem Zugangspunkt bedient wird, eine Kennung eines Kommunikationsbetreibers des Zugangspunkts (101) und/oder eine Firmware-Version des Zugangspunkts umfassen.

3. Verfahren nach Anspruch 1, wobei das Vergleichen der Zugangspunktcharakteristika und der Netzwerkressourcencharakteristika ferner umfasst:

Zuordnen eines ersten Werts zu einer Zugangspunktcharakteristik und eines zweiten Werts zu einer entsprechenden Netzwerkressourcencharakteristik; und

Zuweisen eines Signifikanzfaktors zu der Zugangspunktcharakteristik und der entsprechenden Netzwerkressourcencharakteristik, wobei ein Wert des Signifikanzfaktors auf einer Bedeutung der Charakteristik für die auf dem Computer in dem Netzwerk gehosteten Daten (105) basiert.

4. Verfahren nach Anspruch 3, wobei der Zugangspunktkoeffizient ($K_p$) basierend auf einem Produkt des ersten Werts und des Signifikanzfaktors berechnet wird, und wobei der Netzwerkressourcenkoeffizient ($K_s$) basierend auf einem Produkt des zweiten Werts und des Signifikanzfaktors berechnet wird.

5. Verfahren nach Anspruch 4, wobei der Zugangspunkt (101) als akzeptabel für das Aufbauen einer Verbindung bestimmt wird, um auf die auf dem Computer in dem Netzwerk gehosteten Daten (105) zuzugreifen, wenn der Zugangspunktkoeffizient ($K_p$) gleich dem oder größer als der Netzwerkressourcenkoeffizient ($K_s$) ist, und wobei ein Zugangspunkt (101) als inakzeptabel für das Aufbauen einer Verbindung bestimmt wird, um auf die auf dem Computer in dem Netzwerk gehosteten Daten (105) zuzugreifen, wenn der Zugangspunktkoeffizient ($K_p$) geringer als der Netzwerkressourcenkoeffizient ($K_s$) ist.

6. Verfahren nach Anspruch 5, wobei, falls bestimmt wird, dass eine Vielzahl von Zugangspunkten (101) akzeptabel für das Aufbauen einer Verbindung ist, um auf die auf dem Computer in dem Netzwerk gehosteten Daten (105) zuzugreifen, ein Zugangspunkt (101) der Vielzahl von Zugangspunkten (101) mit einem höchsten Zugangspunktkoeffizienten ($K_p$) ausgewählt wird, um die Verbindung zu den Netzwerk aufzubauen.

7. System zum Bestimmen vertrauenswürdiger drahtloser Zugangspunkte (101), wobei das System umfasst:

ein Mobilgerät (100), umfassend ein Steuermodul (301) und ein Analysemodul (302), die dazu konfiguriert sind:

durch das Steuermodul (310) einen oder mehrere drahtlose Zugangspunkte (101) zu identifizieren, die verfügbar sind, um sich mit einem Netzwerk zu verbinden, um auf Daten (105) zuzugreifen, die auf einem Computer in dem Netzwerk gehostet sind;

**dadurch gekennzeichnet, dass** das Mobilgerät (100) dazu konfiguriert ist:

durch das Steuermodul (301) eine Vielzahl von Zugangspunktcharakteristika für jeden des einen oder der mehreren identifizierten drahtlosen Zugangspunkte (101) zu erhalten, wobei die Zugangspunktcharakteristika eine Betriebsdauer des Zugangspunkts (101), eine Anzahl von Sicherheitsvorfällen an dem Zugangspunkt (101), ein Vertrauensniveau von Benutzern des Zugangspunkts (101) und/oder eine Änderungsfrequenz von Setupparametern des Zugangspunkts (101) umfassen;

durch das Steuermodul (301) und von den Daten (105) und/oder dem die Daten hostenden Computer (105) eine Vielzahl von Netzwerkressourcencharakteristika zu erhalten, die erforderlich sind, um auf die Daten (105) zuzugreifen, wobei sich die Netzwerkressourcencharakteristika auf erforderliche Netzwerksicherheit und erforderliche Netzwerkbandbreite beziehen, um auf die Daten (105) zuzugreifen;

durch das Analysemodul (302) einen Zugangspunktkoeffizienten ($K_p$) für jeden des einen oder der mehreren identifizierten drahtlosen Zugangspunkte (101) zu berechnen, der auf der Vielzahl von Zugangspunktcharakteristika basiert;

durch das Analysemodul (302) einen Netzwerkressourcenkoeffizienten ($K_s$) für die auf dem Computer gehosteten Daten (105) zu berechnen, der auf der Vielzahl von Netzwerkressourcencharakteristika basiert,;

durch das Analysemodul (302) jeden berechneten Zugangspunktkoeffizienten ($K_p$) mit dem berechneten Netzwerkressourcenkoeffizienten ($K_s$) zu vergleichen;

durch das Analysemodul (302), basierend auf dem Vergleich des Zugangspunktkoeffizienten ($K_p$) und des Netzwerkressourcenkoeffizienten ($K_s$), wenigstens einen vertrauenswürdigen drahtlosen Zugangspunkt (101) des einen oder der mehreren identifizierten drahtlosen Zugangspunkte (101) zu bestimmen, der akzeptabel für das Aufbauen einer Verbindung ist, um auf die auf dem Computer gehosteten Daten (105) zuzugreifen; und

eine Verbindung zu dem Netzwerk über den wenigstens einen vertrauenswürdigen drahtlosen Zugangspunkt (101) aufzubauen, um auf die auf dem Computer in dem Netzwerk gehosteten Daten (105) zuzugreifen.

8. System nach Anspruch 7, wobei die Zugangspunktcharakteristika ferner eine Adresse des Zugangspunkts (101), eine Kennung des Zugangspunkts (101), eine Funkzellenkennung, eine Service-Satz-Identifikation (SSID), eine Basis-Service-Identifikation (BSID), ein Steuerschema für Codierungsschlüssel, eine Netzwerkschutztechnologie, eine versteckte SSID, eine Verkehrskanalkapazität des Zugangspunkts (101), eine Anzahl von einmaligen Benutzern, die sich mit dem Zugangspunkt (101) während der Existenz des Zugangspunkts (101) verbunden haben, einen physischen Ort des Zugangspunkts (101), einen Typ des drahtlosen Netzwerks (105), das von dem Zugangspunkt bedient wird, eine Kennung eines Kommunikationsbetreibers des Zugangspunkts (101) und/oder eine Firmware-Version des Zugangspunkts (101) umfassen.

9. System nach Anspruch 7, wobei, um die Zugangspunktcharakteristika und die Netzwerkressourcencharakteristika zu vergleichen, das Mobilgerät (100) ferner dazu konfiguriert ist:

einen ersten Wert einer Zugangspunktcharakteristik und einen zweiten Wert einer entsprechenden Netzwerkressourcencharakteristik zuzuordnen; und

einen Signifikanzfaktor der Zugangspunktcharakteristik und der entsprechenden Netzwerkressourcencharakteristik zuzuschreiben, wobei ein Wert des Signifikanzfaktors auf einer Bedeutung der Charakteristik für die auf dem Computer in dem Netzwerk gehosteten Daten (105) basiert.

10. System nach Anspruch 9, wobei der Zugangspunktkoeffizient ($K_p$) basierend auf einem Produkt des ersten Werts und des Signifikanzfaktors berechnet wird, und wobei der Netzwerkressourcenkoeffizient ($K_s$) basierend auf einem Produkt des zweiten Werts und des Signifikanzfaktors berechnet wird.

11. System nach Anspruch 10, wobei ein Zugangspunkt (101) als akzeptabel für das Aufbauen einer Verbindung bestimmt wird, um auf die auf dem Computer in dem Netzwerk gehosteten Daten (105) zuzugreifen, wenn der Zugangspunktkoeffizient ($K_p$) gleich dem oder größer als der Netzwerkressourcenkoeffizient ($K_s$) ist, und wobei ein Zugangspunkt (101) als inakzeptabel für das Aufbauen einer Verbindung bestimmt wird, um auf die auf dem Computer in dem Netzwerk gehosteten Daten (105) zuzugreifen, wenn der Zugangspunktkoeffizient ($K_p$) geringer als der Netzwerkressourcenkoeffizient ($K_s$) ist.

12. System nach Anspruch 11, wobei, falls bestimmt wird, dass eine Vielzahl von Zugangspunkten (101) akzeptabel für das Aufbauen einer Verbindung ist, um auf die auf dem Computer in dem Netzwerk gehosteten Daten (105) zuzugreifen, ein Zugangspunkt (101) der Vielzahl von Zugangspunkten (101) mit einem höchsten Zugangspunktkoeffizienten ($K_p$) ausgewählt wird, um die Verbindung zu den Netzwerk aufzubauen.

13. Computerprogrammprodukt, das auf einem nicht-flüchtigen computerlesbaren Medium gespeichert ist, zum Bestimmen vertrauenswürdiger drahtloser Zugangspunkte, wobei das Computerprogrammprodukt computerausführbare Anweisungen nach einem der Verfahrensansprüche 1 bis 6 umfasst.

**Revendications**

1. Un procédé de détermination de points d'accès sans fil de confiance, le procédé comprenant :

l'identification, par un module de commande (301) d'un dispositif mobile (100), d'un ou de plusieurs points d'accès sans fil (101) disponibles pour un raccordement à un réseau de façon à accéder à des données (105) hébergées sur un ordinateur dans le réseau,

l'obtention, par le module de commande (301), d'une pluralité de caractéristiques de point d'accès pour chacun des un ou plusieurs points d'accès sans fil identifiés (101), les caractéristiques de point d'accès comprenant au moins un élément parmi une période de fonctionnement du point d'accès (101), un nombre d'incidents de sécurité au niveau du point d'accès (101), un niveau de confiance d'utilisateurs du point d'accès (101) et une fréquence de modification de paramètres de configuration du point d'accès (101),

l'obtention, par le module de commande (301) et à partir d'au moins un élément parmi les données (105) et l'ordinateur hébergeant les données (105), d'une pluralité de caractéristiques de ressource de réseau nécessaires pour accéder aux données (105), les caractéristiques de ressource de réseau portant sur une sécurité de réseau requise et une bande passante de réseau requise pour accéder aux données (105),

le calcul, par un module d'analyse (302) du dispositif mobile (100), d'un coefficient de point d'accès ($K_p$) pour chacun des un ou plusieurs points d'accès sans fil identifiés (101) qui est basé sur la pluralité de caractéristiques de point d'accès,

le calcul, par le module d'analyse (302), d'un coefficient de ressource de réseau ($K_s$) pour les données (105) hébergées sur l'ordinateur qui est basé sur la pluralité de caractéristiques de ressource de réseau,

la comparaison, par le module d'analyse (302), de chaque coefficient de point d'accès calculé ($K_p$) au coefficient de ressource de réseau calculé ($K_s$),

la détermination, par le module d'analyse (302), en fonction de la comparaison du coefficient de point d'accès ($K_p$) au coefficient de ressource de réseau ($K_s$), d'au moins un point d'accès sans fil de confiance (101) des un ou plusieurs points d'accès sans fil identifiés (101) qui est acceptable pour l'établissement d'une connexion d'accès aux données (105) hébergées sur l'ordinateur dans le réseau, et

l'établissement, par le dispositif mobile (100), d'une connexion au réseau par l'intermédiaire du point d'accès sans fil de confiance (101) de façon à accéder aux données (105) hébergées sur l'ordinateur dans le réseau.

2. Le procédé selon la revendication 1, dans lequel les caractéristiques de point d'accès comprennent en outre au moins un élément parmi une adresse du point d'accès (101), un identifiant du point d'accès (101), un identifiant de cellule, une identification d'ensemble de services (SSID), une identification de service de base (BSID), un mécanisme de commande destiné à des clés de chiffrement, une technologie de protection de réseau, une SSID masquée, une capacité de trafic de canal du point d'accès (101), un nombre d'utilisateurs uniques qui se sont connectés au point d'accès (101) au cours de l'existence du point d'accès (101), un emplacement physique du point d'accès (101), un type de réseau sans fil (105) desservi par le point d'accès (101), un identifiant d'un opérateur de communication du point d'accès (101) et une version micrologicielle du point d'accès (101).

3. Le procédé selon la revendication 1, dans lequel la comparaison des caractéristiques de point d'accès et des caractéristiques de ressource de réseau comprend en outre :

l'affectation d'une première valeur à une caractéristique de point d'accès et d'une deuxième valeur à une caractéristique de ressource de réseau correspondante, et

l'attribution d'un facteur d'importance à la caractéristique de point d'accès et à la caractéristique de ressource de réseau correspondante, une valeur du facteur d'importance étant basée sur une importance de la caractéristique vis-à-vis des données (105) hébergées sur l'ordinateur dans le réseau.

4. Le procédé selon la revendication 3, dans lequel le coefficient de point d'accès ($K_p$) est calculé en fonction d'un produit de la première valeur et du facteur d'importance et dans lequel le coefficient de ressource de réseau ($K_s$) est calculé en fonction d'un produit de la deuxième valeur et du facteur d'importance.

5. Le procédé selon la revendication 4, dans lequel le point d'accès (101) est déterminé être acceptable pour l'établissement d'une connexion d'accès aux données (105) hébergées sur l'ordinateur dans le réseau si le coefficient de point d'accès ($K_p$) est égal ou supérieur au coefficient de ressource de réseau ($K_s$) et dans lequel un point d'accès (101) est déterminé être non acceptable pour l'établissement d'une connexion d'accès aux données (105) hébergées sur l'ordinateur dans le réseau si le coefficient de point d'accès ($K_p$) est inférieur au coefficient de ressource de réseau ($K_s$).

**6.** Le procédé selon la revendication 5, dans lequel, si une pluralité de points d'accès (101) sont déterminés être acceptables pour l'établissement d'une connexion d'accès aux données (105) hébergées sur l'ordinateur dans le réseau, un point d'accès (101) de la pluralité de points d'accès (101) avec un coefficient de point d'accès le plus élevé ($K_p$) est sélectionné de façon à établir la connexion au réseau.

**7.** Un système de détermination de points d'accès sans fil de confiance (101), le système comprenant :

un dispositif mobile (100) comprenant un module de commande (301) et un module d'analyse (302) configurés de façon à :

identifier, par le module de commande (301), un ou plusieurs points d'accès sans fil (101) disponibles pour un raccordement à un réseau de façon à accéder à des données (105) hébergées sur un ordinateur dans le réseau,

**caractérisé en ce que** le dispositif mobile (100) est configuré de façon à :

obtenir, par le module de commande (301), une pluralité de caractéristiques de point d'accès pour chacun des un ou plusieurs points d'accès sans fil identifiés (101), les caractéristiques de point d'accès comprenant au moins un élément parmi une période de fonctionnement du point d'accès (101), un nombre d'incidents de sécurité au niveau du point d'accès (101), un niveau de confiance d'utilisateurs du point d'accès (101) et une fréquence de modification de paramètres de configuration du point d'accès (101), obtenir, par le module de commande (301) et à partir d'au moins un élément parmi les données (105) et l'ordinateur hébergeant les données (105), une pluralité de caractéristiques de ressource de réseau nécessaires pour accéder aux données (105), les caractéristiques de ressource de réseau portant sur une sécurité de réseau requise et une bande passante de réseau requise pour accéder aux données (105),

calculer, par le module d'analyse (302), un coefficient de point d'accès ($K_p$) pour chacun des un ou plusieurs points d'accès sans fil identifiés (101) qui est basé sur la pluralité de caractéristiques de point d'accès, calculer, par le module d'analyse (302), un coefficient de ressource de réseau ($K_s$) pour les données (105) hébergées sur l'ordinateur qui est basé sur la pluralité de caractéristiques de ressource de réseau,

comparer, par le module d'analyse (302), chaque coefficient de point d'accès calculé ($K_p$) au coefficient de ressource de réseau calculé ($K_s$), déterminer, par le module d'analyse (302), en fonction de la comparaison du coefficient de point d'accès ($K_p$) au coefficient de ressource de réseau ($K_s$), au moins un point d'accès sans fil de confiance (101) des un ou plusieurs points d'accès sans fil identifiés (101) qui est acceptable pour l'établissement d'une connexion d'accès aux données (105) hébergées sur l'ordinateur dans le réseau, et établir une connexion au réseau par l'intermédiaire du au moins un point d'accès sans fil de confiance (101) de façon à accéder aux données (105) hébergées sur l'ordinateur dans le réseau.

**8.** Le système selon la revendication 7, dans lequel les caractéristiques de point d'accès comprennent en outre au moins un élément parmi une adresse d'un point d'accès (101), un identifiant du point d'accès (101), un identifiant de cellule, une identification d'ensemble de services (SSID), une identification de service de base (BSID), un mécanisme de commande destiné à des clés de chiffrement, une technologie de protection de réseau, une SSID masquée, une capacité de trafic de canal du point d'accès (101), un nombre d'utilisateurs uniques qui se sont connectés au point d'accès (101) au cours de l'existence du point d'accès (101), un emplacement physique du point d'accès (101), un type de réseau sans fil desservi par le point d'accès (101), un identifiant d'un opérateur de communication du point d'accès (101), une version micrologicielle du point d'accès (101).

**9.** Le système selon la revendication 7, dans lequel, afin de comparer les caractéristiques de point d'accès aux caractéristiques de ressource de réseau, le dispositif mobile (100) est configuré en outre de façon à :

affecter une première valeur à une caractéristique de point d'accès et une deuxième valeur à une caractéristique de ressource de réseau correspondante, et attribuer un facteur d'importance à la caractéristique de point d'accès et à la caractéristique de ressource de réseau correspondante, une valeur du facteur d'importance étant basée sur une importance de la caractéristique vis-à-vis des données (105) hébergées sur l'ordinateur dans le réseau.

**10.** Le système selon la revendication 9, dans lequel le coefficient de point d'accès ($K_p$) est calculé en fonction d'un produit de la première valeur et du facteur d'importance et dans lequel le coefficient de ressource de réseau ($K_s$) est calculé en fonction d'un produit de la deuxième valeur et du facteur d'importance.

**11.** Le système selon la revendication 10, dans lequel un point d'accès (101) est déterminé être acceptable pour l'établissement d'une connexion d'accès aux données (105) hébergées sur l'ordinateur dans le réseau si le coefficient de point d'accès ($K_p$) est égal ou supérieur au coefficient de ressource de réseau ($K_s$) et dans lequel un point d'accès (101) est déterminé être non acceptable pour l'établissement d'une connexion d'accès aux données (105) hébergées sur l'ordinateur dans le réseau si le coefficient de point d'accès ($K_p$) est inférieur au coefficient de ressource de réseau ($K_s$).

**12.** Le système selon la revendication 11, dans lequel, si une pluralité de points d'accès (101) sont déterminés être acceptables pour l'établissement d'une connexion d'accès aux données (105) hébergées sur l'ordinateur dans le réseau, un point d'accès (101) de la pluralité de points d'accès (101) avec un coefficient de point d'accès le plus élevé ($K_p$) est sélectionné de façon à établir la connexion au réseau.

**13.** Un produit de programme informatique conservé en mémoire sur un support lisible par ordinateur non transitoire, destiné à la détermination de points d'accès sans fil de confiance, le produit de programme informatique contenant des instructions exécutables par ordinateur selon l'une quelconque des revendications de procédé 1 à 6.

**Fig. 1**

200 — Request connection of device to network resource

201 — Find available wireless access points

202 — Obtain characteristics of available access points

203 — Identify characteristics of the network resource required for establishing a connection to the resource

204 — Determine whether wireless access point is trusted for connecting to the network resource

**Fig. 2**

**Fig. 3**

**Fig. 4**

EP 2 950 591 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110208866 A1

- US 8537715 B1